# EUROPÄISCHE PATENTANMELDUNG

(11) **EP 2 322 830 A1**
(43) Veröffentlichungstag der Anmeldung: **18.05.2011**
(21) Anmeldenummer: 09176003.3
(22) Anmeldetag: 13.11.2009
(51) Int. Cl.: F16L 3/10, F16L 3/24, F16L 3/26, F16L 55/035, H02G 3/32, F16L 3/11

(54) **Multifunktionale Rohrschelle**

(71) Anmelder: ZURECON AG, 8003 Zürich (CH)
(72) Erfinder: Pfluger, Gerd, CH-4625, Oberbuchsiten (CH)
(74) Vertreter: Rutz, Peter

(57) **Zusammenfassung**

Die Rohrschelle (1) erlaubt die für den Brandfall gesicherte Installation einer Leitung (2), insbesondere eines Rohres. Dazu ist ein zweiteiliges Systemelement vorgesehen, das ein der Montage der Rohrschelle (1) dienendes Montageteil (12) und ein Aufnahmeteil (11) aufweist. Erfindungsgemäss sind das Montageteil (12), das ein mit Montageöffnungen (125) versehenes U-Profil mit einer Grundplatte (122) und zwei Seitenwänden (121, 123) aufweist, und das Aufnahmeteil (11), das ein V-förmiges Aufnahmesegment (111) aufweist, voneinander getrennt und weisen beidseitig je wenigstens zwei zueinander korrespondierende, angeformte Verbindungselemente (126, 112) auf, durch die sie derart miteinander verbindbar sind, dass die vom Aufnahmeteil (11) gehaltene Leitung (2) vom Montageteil (12) und vom Aufnahmeteil (11) umschlossen ist.

## Beschreibung

Die Erfindung betrifft eine Rohrschelle nach dem Oberbegriff des Patentanspruchs 1.

Rohrschellen dienen der Installation von Leitungen, insbesondere Rohren, welche fest mit einem Baukörper zu verbinden und an einer Montageposition stabil zu halten sind. Dabei sind verschiedene Einsatzkriterien zu beachten. Besonders wichtig sind die mechanische Belastbarkeit und die Handhabbarkeit der Rohrschelle. Diese soll schnell, sicher und komfortabel montierbar sein und die installierte Leitung zuverlässig halten.

Sofern Sicherheit im Brandfall gefordert ist, werden Rohrschellen verwendet, welche wenigstens zwei zueinander komplementäre Vorrichtungsteile aus massivem Material, insbesondere Metall, aufweisen, welche eine installierte Leitung umschliessen und auch im Brandfall sicher halten.

Aus [1], EP 1 741 965 A1, ist eine gattungsgemässe Rohrschelle bekannt, die ein metallenes Systemelement aufweist, das ein der Montage der Rohrschelle dienendes Montageteil und ein der Aufnahme einer Leitung dienendes Aufnahmeteil umfasst, welches an zwei Endstücken mittels Schrauben mit zwei dazu korrespondierenden Endstücken eines metallenen Abschlusselements verbindbar ist, durch das die installierte Leitung in der Rohrschelle eingeschlossen wird.

Das Montageteil wird normalerweise in horizontaler Ausrichtung z.B. mit einer Profilschiene verbunden. Weitere Montagemöglichkeiten, z.B. die Montage des Systemelements an einer Wand, an der Decke oder am Boden, sind nicht vorhanden. Ferner ist die Rohrschelle aufwändig ausgestaltet und erfordert Schrauben und Werkzeug, um das Abschlusselement zu fixieren.

Aus [2], WO0104529A1, und [3], FR2214343A5, sind weitere Rohrschellen bekannt, welche ein Systemelement aufweisen, das ein der Montage der Rohrschelle dienendes Montageteil und ein der Aufnahme wenigstens einer Leitung dienendes Aufnahmeteil umfasst. Die Systemteile werden ebenfalls vorinstalliert, wonach die zu installierende Leitung in das Aufnahmeteil eingelegt und mittels eines metallenen Abschlusselements fixiert wird. Typischerweise werden die Systemelemente auch bei diesen Rohrschellen in horizontaler Ausrichtung montiert, so dass die installierte Leitung auch dann gehalten ist, wenn das Abschlusselement nicht montiert ist. Sofern die Rohrschelle jedoch an einer Wand oder der Decke montiert werden sollen, so sind die Montagemöglichkeiten beschränkt. Die Ausrichtung des Aufnahmeteils ist dabei durch die Montage des Systemelements vorbestimmt und nicht frei wählbar. Die Installation der Leitung wird an nicht leicht zugänglichen Stellen daher behindert, weshalb ein anderer Installationsort gesucht werden muss. Es ist ferner zu beachten, dass auch bei diesen Rohrschellen die Verbindung der metallenen Vorrichtungsteile mittels Schrauben erfolgt, weshalb die Installation der Rohrschelle an nicht leicht zugänglichen Stellen auch aus diesem Grund nicht in Erwägung gezogen wird. In der Praxis wird der Handwerker somit unter verschiedenen Rohrschellen einen Typ auswählen, der sich für den Einsatz an Installationsort eignet.

Sofern Sicherheit im Brandfall nicht gefordert ist, sind aus [4], DE102006033800A1, oder [5], CH644436A5, bekannte Verbindungsvorrichtungen einsetzbar, die nur ein metallenes Systemelement aufweisen, auf dem die Leitung mittels eines Kabelbinders fixiert wird. Typischerweise werden diese Rohrschellen mit nach oben geöffnetem Aufnahmeteil jeweils horizontal montiert. Sofern diese Rohrschellen an der Wand oder der Decke montiert werden, wird die Leitung im Aufnahmeteil nicht gehalten, weshalb sie mit dem Kabelbinder zu fixieren ist. Auch in diesem Fall wird durch die Rohrschelle eine einzige Installationsart vorgeschrieben.

Für jede Anwendung und jeden Installationsort muss der Hersteller eine passende Rohrschelle bereitstellen, die vom Anwender mit entsprechendem Aufwand zu lagern ist. Für den Installateur ergibt sich die Schwierigkeit, dass sich oft erst während den Installationsarbeiten herausstellt, welche Rohrschelle besonders geeignet ist. Es müssen daher verschiedene Rohrschellen mitgeführt werden, von denen die jeweils passende auszuwählen ist.

Der vorliegenden Erfindung liegt daher die Aufgabe zugrunde, eine verbesserte Rohrschelle zu schaffen.

Insbesondere ist eine einfach aufgebaute Rohrschelle zu schaffen, die unter verschiedenen Installationsbedingungen vielseitig montierbar und zum spielfreien, stabilen und Material schonenden Halten von Rohren und Leitungen geeignet ist, die unterschiedliche Durchmesser aufweisen.

Die Rohrschelle soll mit minimalem Aufwand vorzugsweise mit einfachen Automaten herstellbar sein.

Die Rohrschelle soll zudem entsprechend der jeweiligen Anwendung konfigurierbar sein, wobei auch eine Konfiguration realisierbar sein soll, welche Sicherheit im Brandfall gewährleistet.

Der Installationsvorgang soll rasch und komfortabel durchführbar sein.

Weiterhin soll gewährleistet werden, dass die durch den Medientransport in den Leitungen verursachte Geräuschentwicklung, unabhängig vom jeweiligen Durchmesser der installierten Leitung, minimal bleibt.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die Rohrschelle erlaubt die für den Brandfall gesicherte Installation einer Leitung, insbesondere eines Rohres. Dazu ist ein zweiteiliges Systemelement vorgesehen, das ein der Montage der Rohrschelle dienendes Montageteil und ein Aufnahmeteil aufweist, die komplementär zueinander sind.

Erfindungsgemäss sind das Montageteil, das ein mit Montageelementen versehenes U-Profil mit einer Grundplatte und zwei Seitenwänden aufweist, und das Aufnahmeteil, das ein V-förmiges Aufnahmesegment aufweist, voneinander getrennt und weisen beidseitig je wenigstens zwei zueinander korrespondierende, angeformte Verbindungselemente auf, durch die sie derart miteinander verbindbar sind, dass die vom Aufnahmeteil gehaltene Leitung in einer ersten Konfiguration vom Montageteil und vom Aufnahmeteil umschlossen ist.

Die erfindungsgemässe Rohrschelle kann in einfacher Weise montiert werden, indem die Grundplatte oder eine der Seitenwände des Montageteils mit einem Installationskörper, z.B. der Decke oder einer Wand eines Gebäudes, einer Deckenstütze oder einem Ausleger verbunden, gegebenenfalls verschraubt wird. Das Montageteil wird dabei derart montiert, dass das Aufnahmeteil in einer vom Installateur gewünschten Weise eingesetzt werden kann. Dabei kann der Installateur wählen, ob das Aufnahmeteil vertikal von unten oder von oben, gegebenenfalls auch von der Seite eingesetzt werden soll.

Vorzugsweise werden das Aufnahmeteil und das Montageteil derart dimensioniert und die Verbindungselemente derart ausgestaltet, dass das Aufnahmeteil in einer ersten Konfiguration und in einer zweiten Konfiguration mit dem Montageteil verbindbar ist. In der ersten Konfiguration, in der das V-förmige Aufnahmesegment vom Montageteil abgewandt ist, wird die Leitung vom Aufnahmeteil und vom Montageteil umschlossen. Im Brandfall wird die Leitung durch das Aufnahmeteil und durch das Montageteil daher auch dann sicher gehalten, wenn weitere Vorrichtungsteile, wie Kabelbinder, zerstört werden.

In der zweiten Konfiguration, ist das Aufnahmesegment dem Montageteil zugewandt und ragt in dieses hinein. In dieser Konfiguration dient die Rohrschelle lediglich als Stütze für die Leitung, welche z.B. mittels eines Kabelbinders befestigt wird. Die erfindungsgemässe Rohrschelle kann daher je nach Anforderung passend konfiguriert werden, so dass die Leitung bei Brandfall gesichert ist oder auch konventionell montierbar ist. Je nach gewählter Konfiguration erfüllt die Rohrschelle verschiedene vom Anwender vorgegebene Funktionen. Die Rohrschelle ist daher flexibel einsetzbar, weshalb mit einer einzigen Rohrschelle praktisch alle relevanten Installationsanforderungen berücksichtigt werden können.

Vorzugsweise weisen die erste und/oder zweite Seitenwand und die Grundplatte wenigstens eine Montageöffnung und/oder wenigstens ein Befestigungslement, beispielsweise einen Montagehaken auf, so dass das Montageteil mit dem Boden, einer Wand oder der Decke eines Baukörpers verschraubt oder anhand des Montagehakens schraubenlos mit einem gelochten Tragprofil verbunden werden kann. Alternativ kann das Tragprofil Haken aufweisen, welche in Montageöffnungen eingehängt werden, die am Montageprofil vorgesehen sind.

Nach der Befestigung des Montageteils kann das Aufnahmeteil anhand der Verbindungselemente schraubenlos mit diesem verbunden werden. Die Verbindungselemente sind vorzugsweise Ausformungen, wie Nocken, Haken, Flügel oder Rippen, und dazu korrespondierende Öffnungen, Nuten oder Ausnehmungen. Besonders vorteilhaft sind auch so genannte BajonettVerschlüsse einsetzbar, bei denen z.B. ein Verschlusselement 112 in eine grössere Öffnung 126 eingeführt wird, die sich in Richtung der Installationsposition verjüngt.

Beispielsweise weist das Aufnahmeteil an dessen Enden nach aussen gerichtete Ausformungen auf, die zu Öffnungen oder Ausnehmungen korrespondieren, im Montageteil vorgesehen sind. Alternativ können Ausformungen am Montageteil und dazu korrespondierende Öffnungen oder Ausnehmungen am Aufnahmeteil vorgesehen werden.

Die Verbindung zwischen dem Montageteil und dem Aufnahmeteil erfolgt besonders einfach, indem das Aufnahmeteil federelastisch ausgestaltet wird, so dass es von unten in das Montageteil hinein verschiebbar ist. Vorzugsweise weist das Montageteil an den Seitenwänden mehrere Verbindungselemente auf, so dass das Aufnahmeteil in passender Höhe fixiert werden kann. Alternativ wird das Aufnahmeteil front- bzw. stirnseitig in das Montageteil hinein verschoben.

In einer weiteren Ausgestaltung ist das Montageteil flexibel ausgestaltet, so dass die Seitenwände nach aussen dehnbar sind. In diesem Fall kann das Aufnahmeteil stark ausgestaltet werden, so dass eine Verformung unter Last ausgeschlossen bleibt. Ein selbsttätiges Lösen durch Krafteinwirkung kann in dieser Ausgestaltung gänzlich ausgeschlossen werden, da die Seitenwände des Montageteils nur auf Zug belastet und daher nicht verformt werden. Eine Verformung der Grundplatte hat zur Folge, dass die Seitenwände gegeneinander wandern und das Aufnahmeteil fest geklemmt wird bzw. die Verbindungselemente gegeneinander gedrückt werden. Mit steigender Belastung erhöht sich daher die Kraft, mit der die Verbindungselemente ineinander verschoben werden, weshalb sich die Belastbarkeit der Rohrschelle proportional zur einwirkenden Belastung erhöht. Ein selbsttätiges Lösen der Rohrschelle ist daher auch in einem weiten Bereich bei ansteigender Last ausgeschlossen.

Durch geschickte Dimensionierung und entsprechende Wahl der Elastizität der Teile des Montageteils und des Aufnahmeteils kann die Rohrschelle somit an verschiedene Belastungsfälle angepasst werden.

Das Montageteil kann besonders einfach gefertigt werden, indem Rippen in die Seitenwände eingeprägt werden, bevor die Seitenwände nach innen abgewinkelt werden. Weiterhin können das Aufnahmeteil und das Montageteil besonders einfach anhand eines Extrusionsverfahrens gefertigt werden. Die auf diese Weise gefertigten Aufnahmeteile und Montageteile können aus Metall oder Kunststoff präzise gefertigt und einfach ineinander verschoben werden. Nach einem Extrusionsverfahren gefertigte Aufnahmeteile und Montageteile können seitlich ineinander verschoben werden. Um eine selbsttätiges Lösen durch seitliches Zurückverschieben zu verhindern wird vorzugsweise ein Arretierelement vorgesehen, welches das Aufnahmeteil und das Montageteil formschlüssig miteinander verbindet.

Das Arretierelement ist beispielsweise ein Sicherungsbolzen, der in Öffnungen im Aufnahmeteil und im Montageteil einführbar ist. Alternativ können die zueinander korrespondierenden Arretierelemente an den Verbindungselementen in Form einer Verzahnung vorgesehen werden. Unter Last oder durch ein vorzugsweise vorgesehenes elastisches Element werden die Verzahnungen nach der Montage der Leitung ineinander gedrückt.

Aufgrund der V-förmigen Ausgestaltung des Aufnahmesegments am Aufnahmeteil kann die Rohrschelle für die Installation von Leitungen verwendet werden, deren Durchmesser sich bis zu einem Mehrfachen voneinander unterscheiden. Dabei ist sichergestellt, dass die installierte Leitung, unabhängig von deren Durchmesser, schonend gehalten wird.

Die V-förmige Ausgestaltung des Aufnahmesegments ist ferner hinsichtlich der schraubenlosen Verbindung wesentlich. Unter Last werden die beiden Flügel des vorzugsweise elastischen Aufnahmesegments nämlich nach aussen gegen die Seitenwände des Montageteils gedrückt. Mit steigender Last steigt daher auch die Kraft an, mit der die formschlüssig ineinander eingreifenden Verbindungselemente gegeneinander gedrückt werden. Durch eine entsprechende Ausgestaltung können die Verbindungselemente daher zum Tragen hoher Lasten ausgestaltet werden, ohne dass sich das Aufnahmeteil selbsttätig lösen kann. Sofern das Aufnahmeteil mittels Haken in die Seitenwände des Montageteils eingehängt wird, resultiert ebenfalls eine zuverlässige Verbindung.

In vorzugsweisen Ausgestaltungen wird innerhalb des Montageteils wenigstens ein elastisches Element angeordnet, welches die installierte Leitung gegen das Aufnahmeteil drückt. Durch das elastische Element wird die installierte Leitung spielfrei und schonend gehalten. Schwingungen werden durch das elastische Element absorbiert, so dass störende Geräusche unterdrückt werden. Weiterhin verstärkt das elastische Element die formschlüssige Verbindung zwischen den Verbindungselementen.

Anstelle eines elastischen Elements kann die Leitung auch mittels eines Metallbügels oder mittels eines Kabelbinders gehalten werden, welcher durch Öffnungen hindurch geführt wird, welche vorzugsweise im Aufnahmeteil vorgesehen sind. Die Leitung kann daher am Aufnahmeteil montiert werden, bevor dieses in das Montageteil eingesetzt wird. Dies ist insbesondere an schwer zugänglichen Stellen vorteilhaft. Ferner ist es möglich, die Leitung mit einem Handgriff aus dem Montageteil zu lösen, um diese zu kontrollieren.

Die installierte Leitung kann ferner mittels eines Halteelements, beispielsweise einem Haltebügel oder Niederhalter, fixiert werden, der vorzugsweise an einer Seitenwand des Montageteils verschiebbar gehalten ist.

In vorzugsweisen Ausgestaltungen wird das Aufnahmeteil mit einem elastischen Lagerelement versehen. Besonders vorteilhaft werden verformbare Lagerelemente eingesetzt, die in der Art eines Ärmels oder eines Schlauchs über das Aufnahmeteil gezogen werden, bevor dieses mittels eines Werkzeugs gebogen wird. Alternativ kann ein elastischer Montageblock in das V-förmige Aufnahmesegment eingesetzt und beispielsweise mittels Ankerelementen arretiert werden. Vorzugsweise besteht das Lagerelement aus weichelastischem Material, so dass die mittels des Montageelements gegen das Lagerelement gedrückte Leitung flächig an diesem anliegt. Dadurch werden Druckstellen vermieden und Vibrationen gedämpft und verhindert, dass sich Körperschall im Gebäude ausbreiten kann.

Die Aufteilung des Systemelements in ein U-förmiges Montageteil und ein V-förmiges Aufnahmeteil hat ferner auch hinsichtlich der Lagerung und Lieferung Rohrschellen besondere Vorteile. Die U-förmigen Montageteile und die V-förmigen Aufnahmeteile können gesondert gestapelt und verpackt werden. Beispielsweise werden fünf bis zehn Rohrschellen in zwei Stapeln erstellt und verpackt. Die Seitenwände der U-förmigen Montageteile können leicht nach aussen gedehnt oder dehnbar sein, so dass der Stapel problemlos erstellt werden kann. Auf diese Weise können der Lageraufwand und der Lieferaufwand enorm reduziert werden.

Nachfolgend wird die Erfindung anhand von Zeichnungen näher erläutert. Dabei zeigt:
- Fig. 1: eine erfindungsgemässe Rohrschelle 1 mit einem V- Profil-förmigen Aufnahmeteil 11 und mit einem U- Profil-förmigen Montageteil 12, welche anhand von ineinander eingreifenden geraden Verbindungselementen 112, 126 in einer wählbaren Position formschlüssig miteinander verbindbar sind;
- Fig. 2: die Rohrschelle 1 von Figur 1 in räumlicher Darstellung;
- Fig. 3: die Rohrschelle 1 von Figur 1 mit hakenförmig ausgestalteten Verbindungselementen 112, 126;
- Fig. 4a: eine einfach ausgestaltete Rohrschelle 1 in einer ersten Konfiguration, mit dem an einer Decke 81 montierten Montageteil 12, das mit dem Aufnahmeteil 11, derart verbunden ist, dass das V- förmige Aufnahmesegment 111 vom Montageteil 12 abgewandt ist;
- Fig. 4b: die an einer Wand 82 montierte Rohrschelle 1 in der Konfiguration von Figur 4a;
- Fig. 4c: die Rohrschelle 1 von Figur 4a in einer zweiten Konfiguration mit dem am Boden 83 montierten und nach oben geöffneten Montageteil 12 und dem darin eingesetzten und ebenfalls nach oben geöffneten Aufnahmeteil 11;
- Fig. 4d: die an einer Wand 82 montierte Rohrschelle 1 in der Konfiguration von Figur 4c;
- Fig. 5: die Rohrschelle 1 von Figur 3 in räumlicher Darstellung;
- Fig. 6: die Rohrschelle 1 von Figur 1 in räumlicher Darstellung;
- Fig. 7a: eine an der Wand 82 montiert erfindungsgemässe Rohrschelle 1 in einer weiteren vorzugsweisen Ausgestaltung; und
- Fig. 7b: die am Boden 83 montierte Rohrschelle 1 von Figur 7a.

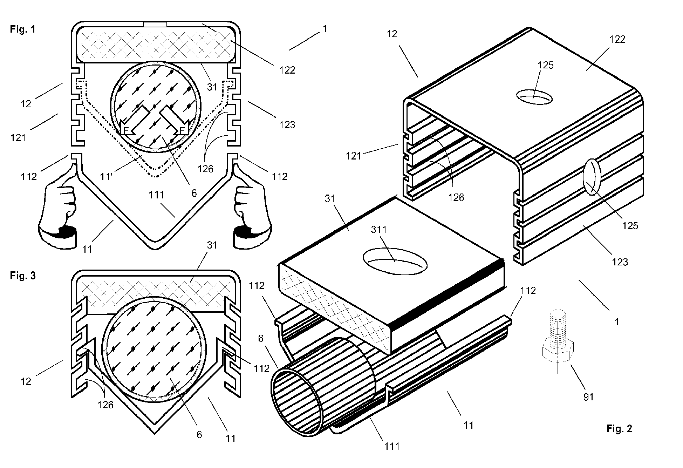

Figur 1 zeigt eine erfindungsgemässe Rohrschelle 1 in einer ersten Konfiguration mit einem zweiteiligen Systemelement, welches ein Aufnahmeteil 11 und ein Montageteil 12 umfasst, die miteinander verbindbar und wieder lösbar sind. Figur 2 zeigt die Teile dieser Rohrschelle 1 in räumlicher Darstellung.

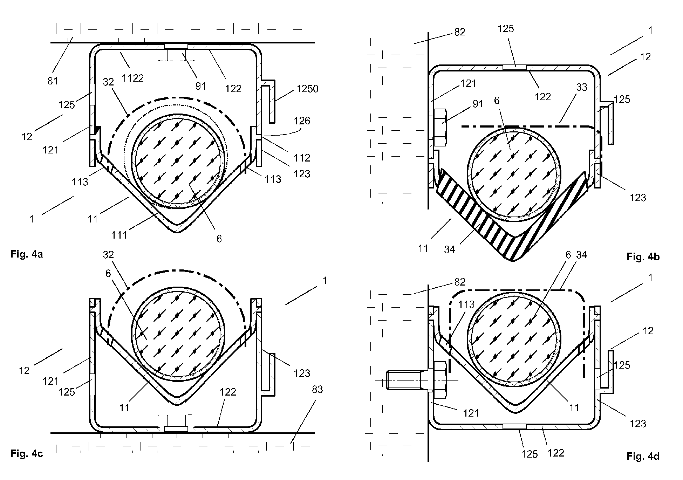

Das Montageteil 12 weist ein U-Profil mit zwei Seitenwänden 121, 123 und einer Grundplatte 122 auf, an denen Montageöffnungen 125 vorgesehen sind, durch die eine Montageschraube 91 einführbar ist. Das Montageteil 12 kann an einer Seitenwand 121, 123 oder mit der Grundplatte 122 am Boden 83, an einer Wand 82 oder an einer Decke 81 montiert werden, wie dies in den Figuren 4a - 4d gezeigt ist. Nach der Befestigung des Montageteils 12 wird das Aufnahmeteil 11, das ein V-förmiges Aufnahmesegment 111 aufweist, mit dem Montageteil 12 verbunden.

Die Verbindung des Aufnahmeteils 11 mit dem Montageteil 12 erfolgt generell ohne Schrauben mittels zueinander korrespondierenden Verbindungselementen 112, 126, die am Aufnahmeteil 11 und am Montageteil 12 vorzugsweise einstückig angeformt oder anderweitig befestigt sind.

In der in Figur 1 gezeigten Ausgestaltung sind an den beiden oberen Enden des V-förmigen Aufnahmeteils 11 nach aussen gerichtete Flügel oder Rippen 112 vorgesehenen, die zu drei Paaren von nutenförmigen Ausnehmungen 126 korrespondieren, die an den Innenseiten der Seitenwände 121, 123 des Montageteils 12 eingeformt sind. Diese Anformungen können mit beliebigen mechanischen Fertigungstechniken, wie Pressen, Biegen oder Fräsen, oder im Rahmen eines Extrusionsverfahrens realisiert werden. Verwendbar sind beliebige Materialien, wie Kunststoff oder Metall, insbesondere Aluminium, welche den definierten Anforderungen, zum Beispiel den Brandschutzbestimmungen, genügen.

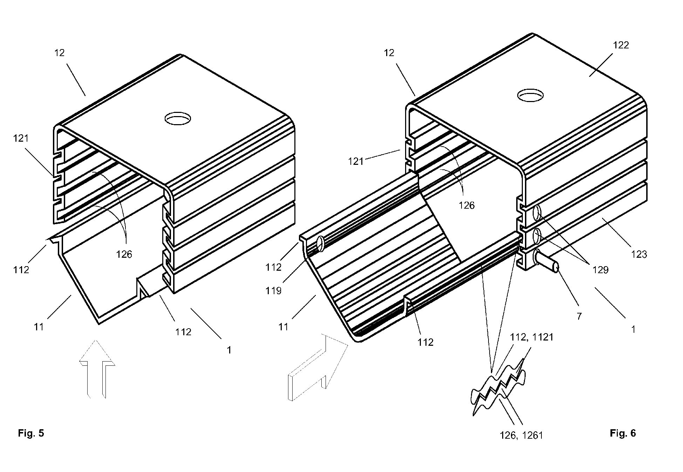

Für die gezeigte Ausgestaltung der Rohrschelle 1 gibt es grundsätzlich zwei Möglichkeiten zur Verbindung des Aufnahmeteils 11 mit dem Montageteil 12. Einerseits kann das Aufnahmeteil 11 von unten in das Montageteil 12 eingefügt werden, wie dies in Figur 5 gezeigt ist. Dazu muss das Aufnahmeteil 11 oder das Montageteil 12 die erforderliche Elastizität aufweisen. Beispielsweise wird das Aufnahmeteil 11 zusammengerückt und in das Montageteil 12 eingesetzt. Anderseits kann das Montageteil 12 auch von vorn bzw. stirnseitig in das Montageteil 12 eingeschoben werden, wie dies in Figur 6 gezeigt ist.

In Figur 1 ist gezeigt, dass das Aufnahmeteil 11, auf dem eine Leitung 6 aufliegt, fast vollständig in das Montageteil 12 eingeschoben wurde und dort im obersten Paar der nutenförmigen Ausnehmungen 126 gehalten ist. Die auf dem Aufnahmeteil 11 liegende Leitung 6 liegt an einem elastischer Element 31 an, welches komprimiert wird und eine Gegenkraft auf die Leitung 6 ausübt, die aufgrund dieser Gegenkraft sowie der Gewichtskraft der Leitung gegen die Seitenwände des Aufnahmesegments 111 gedrückt wird. Unter der einwirkenden Kraft werden die Seitenwände des Aufnahmesegments 111 auseinander gestossen, so dass die Verbindungselemente 112, 126 nach der Installation der Leitung 6 durch diese zusätzlich gesichert werden. Die installierte Leitung 6 dient somit als zusätzliches Arretierelement, welches das selbsttätige Lösen des Aufnahmeteils 11 verhindert. Sofern das Aufnahmeteil 11 starr ausgestaltet ist und das Montageteil 12 über eine gewisse Elastizität verfügt, so bewegen sich die Seitenwände 121, 123 des Montageteils 12 gegeneinander und verstärken die formschlüssige Verbindung zwischen den Verbindungselementen 112, 126.

Aufgrund der V-Form des Aufnahmesegments 111 können mittels der Rohrschelle 1 nicht nur Leitungen 6 mit unterschiedlichen Durchmessern spielfrei gehalten werden. Zusätzlich resultiert eine Arretierfunktion, welche die Installation sichert und eine erhöhte Belastbarkeit gewährleistet.

Das elastische Element 31 kann ein komprimierbarer Körper aus Kunststoffmaterial oder ein Federelement aus Metall oder Kunststoff sein, welches vor oder nach der Installation des Montageteils 12 in dieses eingesetzt. Für den Fall, dass das elastische Element 31 vor der Befestigung des Montageteils 12 eingesetzt wird, weist dieses vorzugsweise eine grössere Montageöffnung 311 auf, welche die Durchführung einer Montageschraube 91 erlaubt. Wie dies in Figur 1 gezeigt ist, wird das elastische Element 31 vorzugsweise mittels einer der an den Seitenwänden 121, 123 des Montageteils 12 vorgesehenen Ausformungen 126 gehalten.

Figur 3 zeigt die Rohrschelle 1 von Figur 1 mit hakenförmig ausgestalteten Verbindungselementen 112, 126, deren Kontaktflächen schräg zur Vertikalen ausgerichtet sind, entlang der das Aufnahmeteil 11 in das Montageteil 12 hinein verschoben wird. Aufgrund der geneigten Flügel 112 oder Haken wird das V-förmige Aufnahmesegment 111 beim Einschieben des Aufnahmeteils 11 automatisch zusammengedrückt, so dass es über mehrere nutenförmige Ausnehmungen 126 hinweg gleiten kann. Anschliessend wird das Aufnahmeteil 11 durch das elastische Element 31 zurück gestossen, so dass die schräg nach aussen gerichteten Flügel 112 in die Ausnehmungen 126 einfahren können und darin gehalten sind.

Bei beiden Ausgestaltungen von Figur 1 und Figur 3 verkeilen sich die Verbindungselemente 112, 126 sobald das Aufnahmeteil 11 nach unten gezogen wird. Durch die hakenförmige Ausgestaltung der Verbindungselemente 112 ist ein Lösen des Aufnahmeteils nur möglich, wenn dieses zuerst wieder nach oben gedrückt oder seitlich ausgefahren wird. Um ein selbsttätiges zeitliches ausfahren zu verhindern wird vorzugsweise wenigstens ein Arretierelement 7 vorgesehen (siehe Figur 6).

In den Figuren 4a, 4b, 4c und 4d sind verschiedene Installationsmöglichkeiten und Konfigurationen einer einfach ausgestalteten multifunktionalen Rohrschelle 1 gezeigt.

Figur 4a zeigt die Rohrschelle 1 in einer ersten Konfiguration, mit dem an einer Decke 81 montierten Montageteil 12, das mit dem Aufnahmeteil 11, derart verbunden ist, dass das V-förmige Aufnahmesegment 111 vom Montageteil 12 abgewandt ist. Die installierte Leitung 6 wird daher vom Aufnahmeteil 11 und vom Montageteil 12 vollständig umschlossen und bleibt auch im Brandfall sicher gehalten. Anstelle eines elastischen Elementes 31, welches in der Ausgestaltung von Figur 1 vorgesehen ist, ist die installierte Leitung 6 hier mittels eines Kabelbinders 32 mit dem Aufnahmeteil 11 fest verbunden.

In Figur 4a ist ferner gezeigt, dass an den Seitenwänden 121, 123 oder an der Grundplatte 122 des Montageteils 12 auch hakenförmige Montageelemente 1250 vorgesehen werden können, mittels derer das Montageteil 12 schraubenlos an einem Trägerprofil eingehängt werden kann. Das Montageteil 12 wird dazu vorzugsweise asymmetrisch ausgestaltet, so dass eine Seitenwand 121 mittels einer Montageschraube 91 und die andere Seitenwand 123 schraubenlos montierbar ist.

Figur 4b zeigt die an einer Wand 82 montierte Rohrschelle 1 in der Konfiguration von Figur 4a. Anstelle eines Kabelbinders 32 ist ein L-förmiger Haltebügel 33 vorgesehen, der an der Seitenwand 123, beispielsweise in der Öffnung 125, verschiebbar gelagert ist, und gegen die Leitung 9 geführt und beispielsweise mittels einer Flügelmutter fixiert werden kann. Ferner ist beispielhaft gezeigt, dass das auf das Aufnahmeteil 11 ein elastisches Lagerelement 34 aufgesetzt ist, welches der schonenden Lagerung der Leitung 6 dient. Vorzugsweise wird ein solches Lagerelement 34, das z.B. aus Gummi gefertigt ist, generell eingesetzt.

Figur 4c zeigt die Rohrschelle 1 von Figur 4a in einer zweiten Konfiguration mit dem am Boden 83 montierten und nach oben geöffneten Montageteil 12 und dem darin eingesetzten und ebenfalls nach oben geöffneten Aufnahmeteil 11. In dieser Konfiguration wird das installierte Kabel 6 nur durch einen Kabelbinder 32 gehalten. Diese Konfiguration der Rohrschelle 1 erlaubt die konventionelle Lagerung der Leitung 6, welche in der Baubranche oft realisiert wird. Die erfindungsgemässe Rohrschelle 1 kann daher wahlweise an die Anforderungen des Installateurs angepasst und auch an kaum zugänglichen Orten montiert werden.

Figur 4d zeigt die an einer Wand 82 montierte Rohrschelle 1 in der Konfiguration von Figur 4c. Auch in dieser Konfiguration kann die Rohrschelle 1 bedarfsweise am Boden 83, an einer Wand 82 oder an einem Profilträger installiert werden. Ferner gezeigt, dass die Leitung 6 von einem U-förmigen Haltebügel 33 gehalten ist, welcher in Öffnungen 113 des Aufnahmeteils 11 eingeführt wurde.

Figur 5 zeigt die Rohrschelle 1 von Figur 3 während des Einsetzens des Montageteils 11. Das Aufnahmeteil 11 wird von unten in das Montageteil 12 eingesetzt. Durch die geneigten Flügel 112 am Aufnahmeteil 11 wird dieses durch die Krafteinwirkung von unten automatisch zusammengedrückt und kann so zwischen den Seitenwänden 121, 123 in das Montageteil 12 eingeschoben werden. Es ist auch möglich, das Aufnahmeteil 11 front- bzw. stirnseitig in das Montageteil 12 einzuschieben. Ferner kann das Aufnahmeteil 11 auf diese Weise auch vorteilhaft wieder vom Montageteil 12 gelöst werden. Ansonsten muss das Aufnahmeteil 11 angehoben und leicht zusammen gepresst werden, wonach es auch nach unten wieder entnommen werden kann.

Figur 6 zeigt die Rohrschelle 1 von Figur 1, bei der das Aufnahmeteil 11 von unten oder von der Seite eingesetzt und wieder entnommen werden kann. Damit die Leitung 6 spielfrei gehalten ist, wird das Aufnahmeteil 11 vorzugsweise von unten eingesetzt und so weit wie möglich nach oben verschoben. Das Lösen der Leitung 6 ist wiederum einfach, da das Aufnahmeteil 11 lediglich seitlich verschoben werden muss. Um ein unerwünschtes selbsttätiges seitliches Verschieben und Lösen des Aufnahmeteils 11 zu verhindern, können verschiedene Massnahmen getroffen werden. Beispielsweise wird ein Arretierbolzen 7 oder einen Kabelbinder 32 durch Öffnungen 129, 119 im Montageteil 12 und im Aufnahmeteil 11 hindurch geführt. Das Aufnahmeteil 11 kann daher erst nach Entnahme dieser Elemente entfernt werden. Alternativ können die Verbindungselemente 112, 126 mit Verzahnungen 1121, 1261 versehen werden, die nach der Installation der Leitung 6 ineinander eingreifen bzw. durch das vorzugsweise vorgesehene elastische Element 31 (siehe Figur 2) gegeneinander gedrückt werden. Bei dieser Ausgestaltung kann das Aufnahmeteil 11 nur gelöst und seitlich verschoben werden, wenn es zuerst manuell angehoben wird.

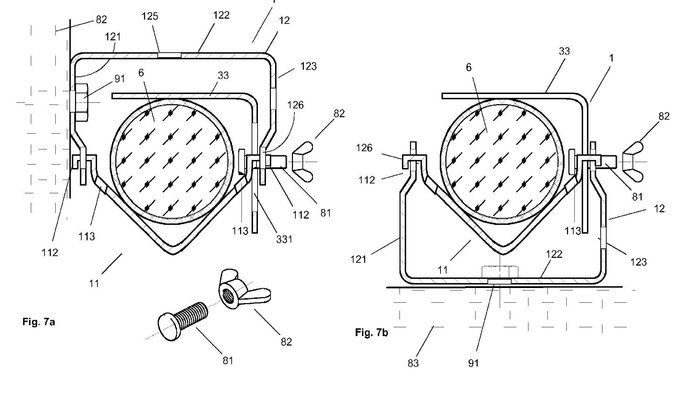

Figur 7a zeigt eine weitere Ausgestaltung der Rohrschelle 1 in der ersten Konfiguration. Bei dieser Ausgestaltung sind die mit den Verbindungselementen 126 versehenen Teile der Seitenwände 121, 123 gegeneinander verschoben, um einen Freiraum zwischen der Wand 82 und der daran anliegenden Seitenwand 121 zu schaffen. Die Verbindungselemente 126 sind als einfache Öffnungen an den unteren Enden der Seitenwände 121, 123 vorgesehen, durch die die hakenförmigen Verbindungselemente 112 des Aufnahmeteils 11 hindurch führbar sind. Das der Wand 82 zugewandte Verbindungselement 112 ragt dabei in den Freiraum zwischen der Wand 82 und der Seitenwand 121 hinein.

Die Reduktion des Durchmessers des U-Profils des Montageteils 12 wird vorzugsweise auch dann vorgesehen, wenn an den Seitenwänden 121, 123 des Montageteils 12 nach aussen gerichtete hakenförmige Verbindungselemente 126 vorgesehen sind.

Figur 7a zeigt ferner einen L-förmigen Haltebügel 33, der einen Längsschlitz 331 aufweist, durch den hindurch eine Schraube 81 führbar ist, die ferner durch Öffnungen oder Ausnehmungen im Aufnahmeteil 11 und/oder im Montageteil 12 geführt ist. Der Haltebügel 33 ist zwischen den Endstücken des Aufnahmeteils 11 und des Montageteils 12 hindurch geführt, welche anhand einer auf die Schraube 81 aufgesetzte Flügelmutter 82 gegen den Haltebügel 33 gepresst werden. Auf diese Weise werden zusätzlich zum Haltebügel 33 auf das Aufnahmeteil 11 und das Montageteil 12 gegenseitig fixiert.

Figur 7b zeigt die am Boden 83 montierte Rohrschelle 1 von Figur 7a in der zweiten Konfiguration. Dabei ist ersichtlich, dass die Verbindung zwischen Haltebügel 33, Aufnahmeteil 11 und Montageteil 12 durch die Schraube 81 und die Flügelmutter 82 vorteilhaft auf dieselbe Weise realisiert wurde.

## Patentansprüche

1. Multifunktionale Rohrschelle (1) für die für den Brandfall gesicherte Installation einer Leitung (2), insbesondere eines Rohres, mit einem Systemelement, das ein der Montage der Rohrschelle (1) dienendes Montageteil (12) und ein Aufnahmeteil (11) aufweist, die komplementär zueinander sind, **dadurch gekennzeichnet, dass** das Montageteil (12), das ein mit Montageelementen (125; 1250) versehenes U-Profil mit einer Grundplatte (122) und zwei Seitenwänden (121, 123) aufweist, und das davon getrennte Aufnahmeteil (11), das ein V-förmiges Aufnahmesegment (111) aufweist, beidseitig je wenigstens zwei zueinander korrespondierende, angeformte Verbindungselemente (126, 112) aufweisen und durch diese derart miteinander verbindbar sind, dass die vom Aufnahmeteil (11) gehaltene Leitung (2) in einer ersten Konfiguration vom Montageteil (12) und vom Aufnahmeteil (11) umschlossen ist.

2. Rohrschelle (1) nach Anspruch 1, **dadurch gekennzeichnet, dass** die Verbindungselemente (126, 112) Ausformungen, wie Nocken, Haken, Flügel oder Rippen (112), und dazu korrespondierende Öffnungen, Nuten oder Ausnehmungen (126) sind.

3. Rohrschelle (1) nach Anspruch 2, **dadurch gekennzeichnet, dass** das Aufnahmeteil (11) an dessen Enden nach aussen gerichtet Ausformungen (112) aufweist, die zu den im Montageteil (12) vorgesehenen Öffnungen oder Ausnehmungen (126) korrespondieren oder dass das Montageteil (12) Ausformungen (112) aufweist, die zu den im Aufnahmeteil(11) vorgesehenen Öffnungen oder Ausnehmungen (126) korrespondieren.

4. Rohrschelle (1) nach einem der Ansprüche 1-3, **dadurch gekennzeichnet, dass** das Aufnahmeteil (11) und Montageteil (12) horizontal und/oder vertikal ineinander verschiebbar sind, wobei das Aufnahmeteil (11) und/oder das Montageteil (12) vorzugsweise elastisch ausgestaltet sind.

5. Rohrschelle (1) nach einem der Ansprüche 1-4, **dadurch gekennzeichnet, dass** wenigstens ein Arretierelement (7, 1121, 1261) vorgesehen ist, welches das Aufnahmeteil (11) und das Montageteil (12) formschlüssig miteinander verbindet.

6. Rohrschelle (1) nach Anspruch 5, **dadurch gekennzeichnet, dass** das Arretierelement (7) ein Sicherungsbolzen ist, der in Öffnungen (119, 129) im Aufnahmeteil (11) und im Montageteil (12) einführbar ist oder dass zueinander korrespondierende Arretierelemente (1121, 1261) an den Verbindungselementen (126, 112) in Form einer Verzahnung vorgesehen sind.

7. Rohrschelle (1) nach einem der Ansprüche 1-6, **dadurch gekennzeichnet, dass** das Aufnahmeteil (11) und das Montageteil (12) derart dimensioniert und die Verbindungselemente (126, 112) derart ausgestaltet sind, dass das Aufnahmeteil (11) in der ersten und in einer zweiten Konfiguration mit dem Montageteil (12) verbindbar ist, wobei das Aufnahmesegment (111) in der ersten Konfiguration von Montageteil (12) abgewandt und in der zweiten Konfiguration dem Montageteil (12) zugewandt ist.

8. Rohrschelle (1) nach einem der Ansprüche 1-7, **dadurch gekennzeichnet, dass** die an der Grundplatte (122) und oder an den Seitenwänden (121, 123) des Montageteils (12) vorgesehen Montageelemente der Aufnahme von Montageschrauben (91) dienende Montageöffnungen (125) oder Montagehaken (1250) sind.

9. Rohrschelle (1) nach einem der Ansprüche 1-8, **dadurch gekennzeichnet, dass** an der ersten Seitenwand (121) des Montageteils (12) wenigstens eine Montageöffnung (125) und an der zweiten Seitenwand (123) des Montageteils (12) wenigstens ein Montagehaken (1250) vorgesehen ist.

10. Rohrschelle (1) nach einem der Ansprüche 1-9, **dadurch gekennzeichnet, dass** das Aufnahmeteil (11) und/oder das Montageteil (12) durch mechanische Bearbeitung oder mittels eines Extrusionsverfahrens aus Metall oder Kunststoff gefertigt sind.

11. Rohrschelle (1) nach einem der Ansprüche 1-10, **dadurch gekennzeichnet, dass** das U-Profil des Montageteils (12) im Bereich der Verbindungselemente (126) einen geringeren Durchmesser aufweist, so dass ein Freiraum für die Befestigung der Verbindungselemente (112) des Aufnahmeteils (11) geschaffen wird.

12. Rohrschelle (1) nach einem der Ansprüche 1-11, **dadurch gekennzeichnet, dass** ein elastisches Element (31) in das Montageteil (12) eingefügt ist, welches gegen die installierte Leitung (6) andrückt.

13. Rohrschelle (1) nach einem der Ansprüche 1-12, **dadurch gekennzeichnet, dass** das Aufnahmeteil (111) Öffnungen (113) aufweist, durch die hindurch ein Kabelbinder (32) oder ein U-förmiger Haltebügel (34) geführt ist.

14. Rohrschelle (1) nach einem der Ansprüche 1-13, **dadurch gekennzeichnet, dass** das Aufnahmeteil (111) Öffnungen (113) aufweist, durch die hindurch ein Kabelbinder (32) oder ein U-förmiger Haltebügel (34) geführt ist.

15. Rohrschelle (1) nach einem der Ansprüche 1-14, **dadurch gekennzeichnet, dass** ein oder dass ein Halteelement (33), vorzugsweise ein L-förmiger Haltebügel, an einer Seitenwand (121; 123) des Montageteils (12) oder zwischen dem Aufnahmeteil (11) und dem Montageteil (12) verschiebbar und fixierbar ist.
